# EUROPEAN PATENT SPECIFICATION

(11) **EP 1 607 285 B1**
(45) Date of publication and mention of the grant of the patent: **08.10.2008**
(21) Application number: 05076411.7
(22) Date of filing: 17.06.2005
(51) Int. Cl.: B60R 22/19

(54) **Belt regulator**
Gurtregler
Regulateur d'une ceinture

(30) Priority: 17.06.2004 NL 1026446
(43) Date of publication of application: 21.12.2005
(73) Proprietor: Senft, Leonardus Antonius Hendricus, 1182 ER Amstelveen (NL)
(72) Inventor: Senft, Leonardus Antonius Hendricus, 1182 ER Amstelveen (NL)
(74) Representative: Kupecz, Arpad

(56) References cited:
- DE-A1- 3 528 931
- DE-U1- 8 506 685
- US-A- 1 444 030
- US-A- 3 824 654
- US-A- 5 653 003
- US-A- 5 692 806

## Description

The present invention relates to a device for reducing a pressure that a seat belt applies on a person, according to the preamble of claim 1 known from DE 3528931.

Motorists and other people who are obliged to wear a seat belt are generally aware of the fact that this belt can apply an uncomfortable pressure. This pressure is found to be especially uncomfortable on, for example, the shoulder, chest and abdomen. The pressure is caused by the automatic retracting mechanism of the seat belt. The force with which the belt is tightened is sufficiently strong to be able to impede a user.

Because of this uncomfortable pressure, many people choose not to wear the belt. This is, of course, not conductive to traffic safety. Moreover, should the vehicle become involved in an accident there is a much greater risk to the person in question, so that the likelihood of sustaining injury is increased considerably.

Attempts to reduce the pressure exerted by the belt have already been made by, for example, applying padded coverings around the belt. However, these coverings merely distribute the pressure over a larger surface and since it is impossible for these large pads to adapt to the shape of a body, they themselves apply additional pressure.

German patent application DE 3528931 relates to a device to be clamped on a seat belt. The working principle is like a clothes-peg. As a consequence, when releasing the force clamping said device on the belt, the device can be easily taken of the belt. Hence, the device can be lost easily.

United States patent US 3,824,654 relates to a device to be clamped on a seat belt. A device should be pivoted around a safety belt. Hence, the pivot is positioned at one side of said belt. When the parts positioned at both sides of the belt are clipped on each other, no movement about the belt is possible. The device must be released completely so as to move it over the belt. This way, a device can be lost easily.

US patent 5,692,806 relates to a clothes-peg like device. Two parts that are connected at one end, provide an opening in which a belt can be slipped. The belt is not completely surrounded by the device and hence can be easily lost.

US patent 1,444,030, filed, on 18th July 1921, and published on 6^{th} February 1923, relates to a lingerie clasp. Its embodiment resembles that of US patent 3,824,654, mentioned above. However, said lingerie clasp is worn by ladies upon the ribbons or shoulder straps of their garments, such as corset covers, brassières, chemises, etc. It is specifically mentioned that the said lingerie clasp is meant for shoulder straps of extremely thin fabric. When moving the said clasp over the shoulder band, it must be opened, and as a consequence it can be lost easily since there is no constant surrounding of the band.

US patent 5,653,003 relates to a clip for a shoulder harness of a vehicle. The embodiment of this clip resembles that of the device according to US 3,824,654, mentioned above and has the same disadvantages.

German Gebrauchsmuster DE 85 06 685 relates to a clamp comprising two legs, and resembling the embodiment of US 5,653,003, indicated above.

Hence, all devices known from the state of the art, have the disadvantage that they do not surround the belt when the restraining force is released. Hence, these known devices can be easily lost when the clamping force is released.

It is the object of the invention to provide a solution to the above-mentioned problem.

The object of the invention is in particular to provide a device for removing this problem.

In order to achieve at least one of the above-mentioned objectives, the invention provides a device for reducing a pressure applied by a seat belt as mentioned above and comprising the measures indicated in claim 1. By using the device according to the present invention, the pressure can be removed completely. The invention is substantially freely movable over the belt when the clip mechanism is open, and clipped to the belt when the clip mechanism is closed.

Above the shoulder of a wearer, a seat belt is guided around a return element comprising an opening that is only slightly larger than the belt itself. The device according to the invention can be positioned around the belt close to said opening. To begin with, the device according to the invention is positioned so as to fasten the belt in the usual manner, whereafter the device according to the invention is slid over the belt in the direction of the opening and subsequently an additional length of belt, for example just 1 cm to for example a maximum of 5 cm, is pulled through the device. At that position, the device will then be clipped on the slightly slackened belt. The belt tensioning device will then cause the device according to the invention to be pulled against the return element. As the pressure with which the device according to the invention is clipped on the belt will only slightly exceed the force with which the belt tensioning device tightens the belt, the belt will not be pulled any further through the opening. In this way, the tension on the belt caused by the belt tensioning device will not be transferred to the wearer.

It has been shown that pulling out the belt, for example, an extra 1 cm to maximally, for example, 5 cm compared with the belt's positioning when used without the belt regulator of the invention, is enough to remove the pressure the belt tensioning device causes the belt to apply on the person. The extra length of belt that needs to be pulled out, will in practice depend on the person wearing the belt, so that the belt regulator of the invention is positioned against the return element to alleviate the tension accordingly. The belt must not be pulled out so far that it can slide off the shoulder. In order to maintain adequate protection for the wearer, the belt is pulled out, for example maximally an extra 5 cm, but preferably maximally an extra 2 cm.

Although the pressure is completely alleviated by means of the device according to the invention, the protection afforded by a seat belt is safeguarded. The extra length of belt is not enough to cause an unsafe situation.

It is also preferred for the surface of at least one of the clip elements facing away from the belt to comprise a communication. Such communication may be chosen from, for example, a symbol, a text or an instruction. The surface is especially suitable for commercial messages. The communication may be printed, for example, by using a colorant, may be a composition of different materials or may be embossed or in relief.

There is a preference for an embodiment wherein the pivotable locking device is kept in the first position by intermating elements provided on the device and on the pivotable locking device.

It is also preferred for the hinge to be provided at a position between two opposite ends of the pivotable locking device.

It is also preferred for the intermating elements to be provided at one of the ends of the pivotable locking device and on the device, respectively.

Other preferences concerning the invention will be apparent from the description of a number of preferred embodiments and from the appended claims.

Hereinafter, the invention will be elucidated by way of a number of figures, which are not intended as limitation.

Identical reference numerals have the same meanings.

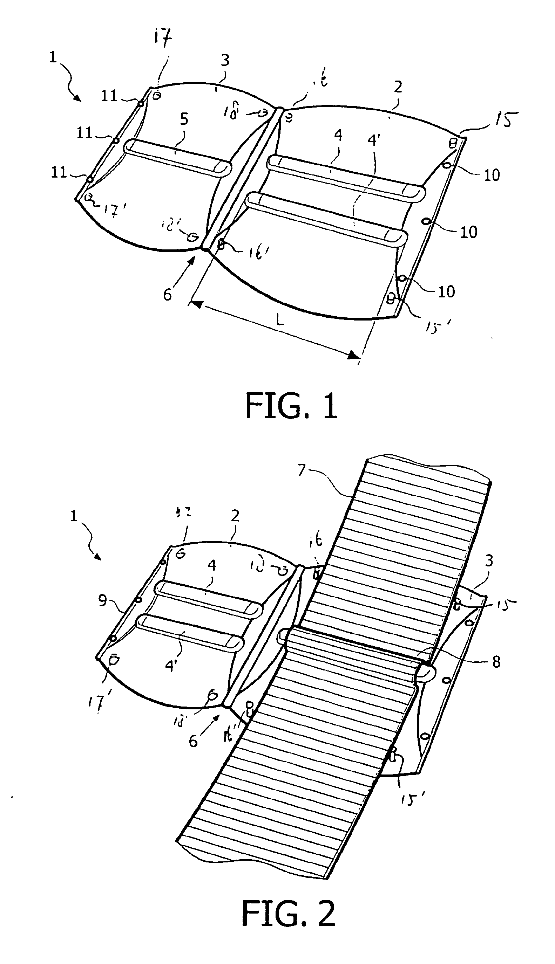

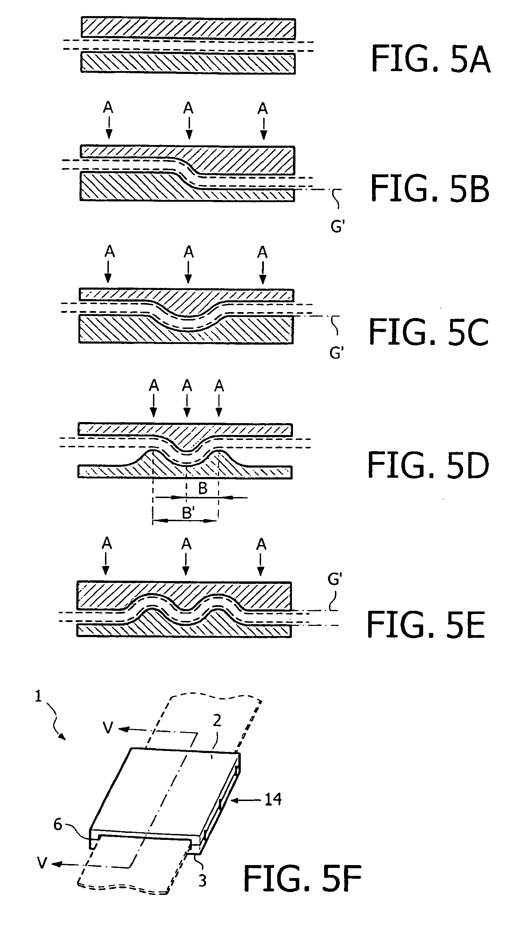

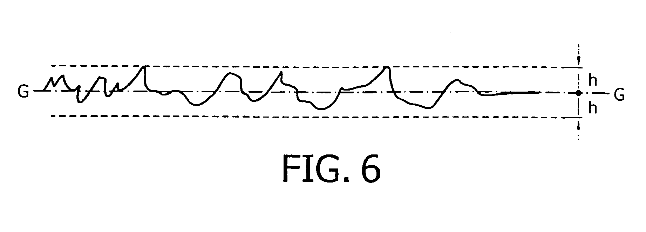

Figurs 1-3, 5 and 6 shows a device which is not according to the invention.

Fig. 4 shows a schematic view of a motorist using a safety belt and a belt regulator according to the invention.

Figures 7 to 15 show a belt regulator according to the invention.

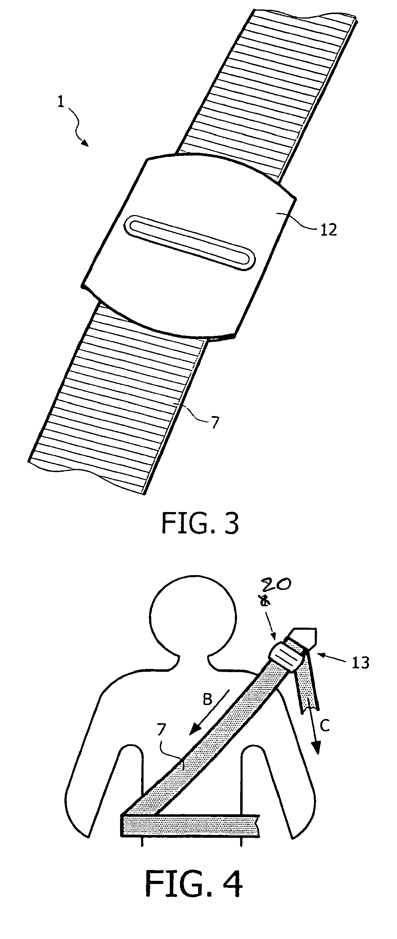

Figure 4 shows the schematic drawing of the position of the belt regulator according to the invention on a belt 7 during use. Initially, the belt regulator can be slid in the direction of the wearer's abdomen and the belt can be positioned in the usual manner. Then the belt regulator can be slid against the return element 13. The belt can then be slightly pulled away from the return element 13 in the direction of arrow B whereafter the belt regulator can be slid against the return element 13. After releasing the belt, it will be kept in the respective position due to the fact that the locking force of the belt regulator is greater than the force exerted by the belt tensioning device in the direction of arrow C.

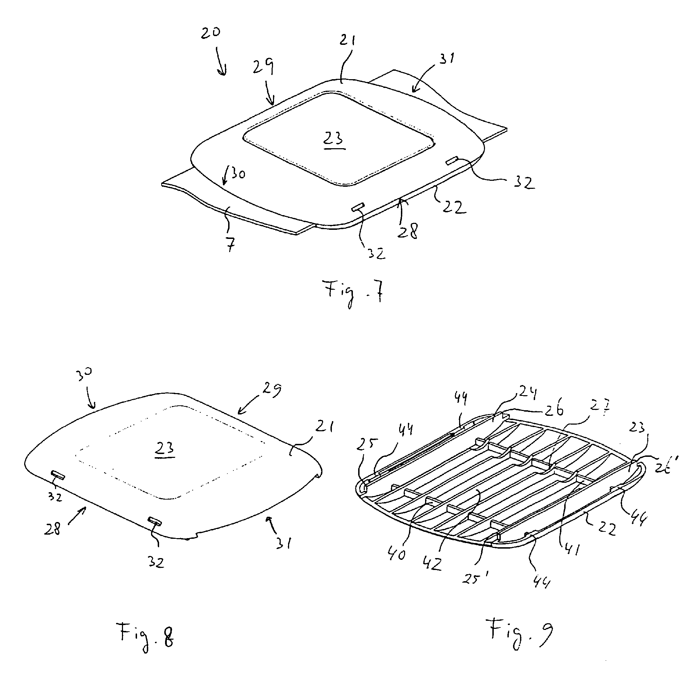

Figure 7 shows a belt regulator of the invention. This comprises a device 20 consisting of two main elements (top element 21 and bottom element 22). These are coupled with each other by means of suitable stop-motioned linkages 32, 33, 44 (see also Figures 8, 9, 10, 11). The belt 7 is guided from a first end 30 through the device 20 to another opposite end 31. In the embodiment shown, the opposite sides 28, 29 are substantially closed. A clip element 23 forms a part of the surface of the main element 21. The main element 21 is provided with openings whose function will be made clear later.

Figures 8 and 9 show the top element 21 and the bottom element 22, respectively. The bottom element 22 comprises guide ribs 24', 24 provided at both sides of the belt (not shown). This prevents displacement of the belt. Although here the guide ribs are embodied as long, solid projections 24', 24, extending from a first end 25, 25' to a second end 26, 26', they may also be embodied as separate projections. For example, there may only be two guide projections at the positions 25, 25' and 26, 26'.

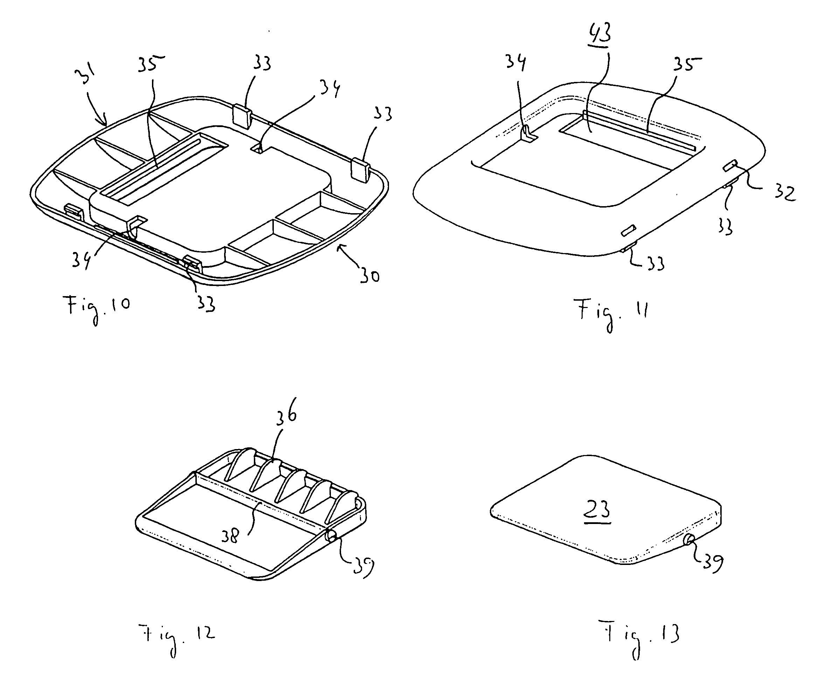

Element 22 is further provided with ribs 42 that prevent a movement of the belt to the bottom of the element 22. There are also reinforcements 40, 41 provided, which prevent the element from bending. The projections 44 serve to receive projecting lips 33 (see Figure 10) to fix the top element 21 and the bottom element 22.

Figure 10 shows a bottom view of the top element 21. The lips 33 are hooked behind the projections 44 (see Figure 9). In this way, the top element 21 is firmly coupled to the bottom element 22. To separate the two elements 21 and 22, a suitable object can be pushed through the opening 32 to push out the lip 33.

The top element 21 is provided with an opening 43, as is also shown in the top view of the top element 21 in Figure 11. At the opening, and substantially parallel thereto, a rib 35 is provided (whose function will be explained later). The top element is also provided with openings 34, whose function will be explained later.

Figures 12 and 13 show the hinge clip 23. Figure 12 shows a bottom view of the clip 23, in which the clip projections 36 are clearly visible. Also shown are the hinge projections 39 that are positioned into the openings 34 of the top element 21. The clip projections 36 fall into the openings 43. A reinforcement 38 is provided so that deformation of the clip 23 due to buckling is to a large extend prevented. Figure 13 shows a top view of the clip 23, in which the hinge projection is clearly visible.

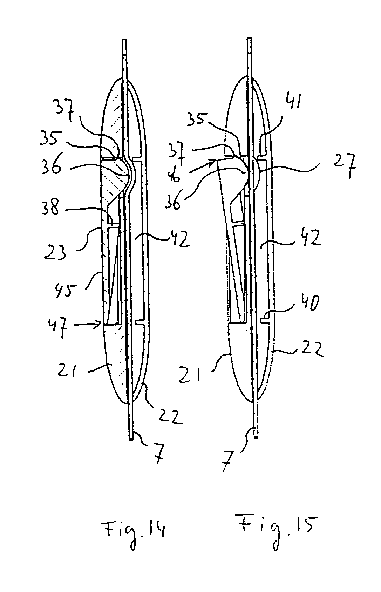

Figures 14 and 15 show a cross section of the device 20 according to the invention, wherein Figure 14 illustrates a belt in the locked condition and wherein Figure 15 illustrates the belt in the freely movable condition.

In the locked condition, the clip projections 36 press against the belt 7. The belt 7 is then in contact with the ribs 32 provided on the bottom portion 22. The shape of the recess 27 in the ribs 42 is approximately the same as the shape of the clip projection 36, so that the belt 7 is firmly fixed. The clip 23 comprises at the end 46 a projection 37, which in the locked condition according to Figure 14 is provided behind the projection 35 on the upper portion 21. This will keep the clip 23 in the locked condition. By applying a pressing force on the portion 45, between the pivoting point 39 and the end 47, the clip 23 will rotate around the pivoting point 39 and the projection 37 will be moved past the projection 35. The belt will then be able to move freely, at least unimpeded by the clip projection 36, through the device 20.

The size of the projections 35 and 37 will have to be chosen such that the force necessary to push the projection 37 past the projection 35 is greater than the force that during use is exerted by the belt on the clip projection 36. A person skilled in the art is quite capable of choosing the appropriate size in accordance with a material to be further specified.

The invention is not limited to the embodiments shown in the figures and described above. The invention is only limited by the appended claims.

An example of the clip mechanism is a generally known belt buckle or clasp.

The regulator may also be a device that is connected with the return element. In that case, the regulator is preferably provided with a clip mechanism as mentioned above.

## Claims

1. A device (20) for reducing a pressure applied by a seat belt (7) on a person using same, wherein the device (20) is clipped around a seat belt (7), comprising a first clip element and a second clip element (21, 22), of which one each is placed to either side of the belt (7) and which are clipped together, **characterized in that** a feed-through opening for the belt (7) is formed,
wherein in one (21) of said first and second clip elements (21, 22), the device (20) comprises a pivotable locking device (23), which in a first position is in contact with one side of the belt (7) and presses the belt (7) against a surface of the device (20) at the other side of the belt (7), in such a manner that the locking force is greater than a retracting force exerted on the belt (7) by a belt tensioning device, and in a second position is at least partly moved away from the first position such that the locking force is smaller than or equal to a retraction force exerted on the belt (7) by a belt tensioning device.

2. A device (20) according to claim 1, wherein the pivotable locking device (23) is kept in the first position by intermating elements (35; 37) provided on the device (20) and on the pivotable locking device (23).

3. A device (20) according to claim 1 or 2, wherein the hinge (39) is provided at a position between two opposite ends (46, 47) of the pivotable locking device (23).

4. A device according to one or both of the claims 2 or 3, wherein the intermating elements (37; 35) are provided on one of the ends of the pivotable locking device (23) and on the device (20), respectively.

5. A device (20) according to one or several of the preceding claims, wherein by means of relief, colour or composition of materials the surface of at least one of the clip elements (21, 22, 23) facing away from the belt (7) is provided with a communication chosen from, for example, a symbol, a text, an instruction or the like.

## Patentansprüche

1. Vorrichtung (20) zum Verringern eines Drucks, der durch einen Sicherheitsgurt (7) auf eine Person, die diesen Gurt benutzt, einwirkt, wobei die Vorrichtung
(20) um einen Sicherheitsgurt (7) herum geklemmt wird und ein erstes Klemmelement und ein zweites Klemmelement (21, 22) umfasst, von denen jeweils eines auf jeder Seite des Gurtes (7) angeordnet ist und die zusammengeklemmt werden, **dadurch gekennzeichnet, dass** eine Durchführöffnung für den Gurt (7) gebildet wird,
wobei die Vorrichtung (20) in einem (21) des ersten und des zweiten Klemmelements (21, 22) eine schwenkbare Verriegelungsvorrichtung (23) umfasst, die in einer ersten Position mit einer Seite des Gurtes (7) in Kontakt steht und den Gurt (7) gegen eine Fläche der Vorrichtung (20) auf der anderen Seite des Gurtes (7) drückt, und zwar in einer solchen Weise, dass die Verriegelungskraft größer ist als eine Rückzugskraft, die durch eine Gurtspannvorrichtung auf den Gurt (7) ausgeübt wird, und in einer zweiten Position mindestens teilweise aus der erstes Position fortbewegt wird, dergestalt, dass die Verriegelungskraft maximal so groß ist wie eine Rückzugskraft, die durch eine Gurtspannvorrichtung auf den Gurt (7) ausgeübt wird.

2. Vorrichtung (20) nach Anspruch 1, wobei die schwenkbare Verriegelungsvorrichtung (23) durch zusammenpassende Elemente (35; 37), die an der Vorrichtung (20) und an der schwenkbaren Verriegelungsvorrichtung (23) angeordnet sind, in der ersten Position gehalten wird.

3. Vorrichtung (20) nach Anspruch 1 oder 2, wobei das Scharnier (39) an einer Position zwischen zwei einander gegenüberliegenden Enden (46, 47) der schwenkbaren Verriegelungsvorrichtung (23) angeordnet ist.

4. Vorrichtung nach einem oder beiden der Ansprüche 2 oder 3, wobei die zusammenpassenden Elemente (37; 35) an einem der Enden der schwenkbaren Verriegelungsvorrichtung (23) bzw. an der Vorrichtung (20) angeordnet sind.

5. Vorrichtung (20) nach einem oder mehreren der vorangehenden Ansprüche, wobei die Oberfläche von mindestens einem der Klemmelemente (21, 22, 23), die von dem Gurt (7) fort weist, mittels eines Reliefs, einer Farbe oder einer Zusammensetzung von Materialien mit einer Möglichkeit der Informationsübermittlung versehen ist, die zum Beispiel aus einem Symbol, einem Text, einer Anweisung oder dergleichen ausgewählt ist.

## Revendications

1. Dispositif (20) pour réduire la pression appliquée par une ceinture de sécurité (7) sur une personne l'utilisant, lequel dispositif (20) est pincé autour d'une ceinture de sécurité (7), comportant un premier élément de pince et un second élément de pince (21, 22), placés chacun sur un côté de la bande (7) et attachés l'un à l'autre par pincement, **caractérisé en ce qu'**une ouverture de traversée pour la bande (7) est formée,
dans lequel, dans l'un (21) desdits premier et second éléments de pince (21, 22), le dispositif (20) comporte un dispositif de blocage pivotant (23) qui, dans une première position, est en contact avec un côté de la bande (7) et presse la bande (7) contre une surface du dispositif (20) sur l'autre côté de la bande (7), d'une manière telle que la force de blocage est plus grande qu'une force de rétraction exercée sur la bande (7) par un dispositif tendeur de ceinture, et, dans une seconde position, est éloigné au moins partiellement de la première position de façon que la force de blocage soit inférieure ou égale à une force de rétraction exercée sur la bande (7) par un dispositif tendeur de ceinture.

2. Dispositif (20) selon la revendication 1, dans lequel le dispositif de blocage (23) pouvant pivoter est maintenu dans la première position par des éléments (35 ; 37) s'accouplant entre eux, situés sur le dispositif (20) et sur le dispositif de blocage (23) pouvant pivoter.

3. Dispositif (20) selon la revendication 1 ou 2, dans lequel la charnière (39) est située dans une position entre deux extrémités opposées (46, 47) du dispositif de blocage (23) pouvant pivoter.

4. Dispositif selon l'une, ou les deux, des revendications 2 et 3, dans lequel les éléments (37 ; 35) s'accouplant entre eux sont situés sur l'une des extrémités du dispositif de blocage (23) pouvant pivoter et sur le dispositif (20), respectivement.

5. Dispositif (20) selon l'une ou plusieurs des revendications précédentes, dans lequel, au moyen d'un relief, d'une couleur ou d'une composition de matières, la surface d'au moins l'un des éléments de pince (21, 22, 23) tournés à l'écart de la ceinture (7) est pourvue d'une information choisie, par exemple, entre un symbole, un texte, une instruction ou analogue.
